# EUROPEAN PATENT SPECIFICATION

(11) **EP 1 038 657 B1**
(45) Date of publication and mention of the grant of the patent: **18.09.2002**
(21) Application number: 00105892.4
(22) Date of filing: 20.03.2000
(51) Int. Cl.: B29D 30/06, B29C 43/10

(54) **Method and apparatus for moulding and curing tyres for vehicle wheels**
Verfahren und Vorrichtung zum Formen und Vulkanisieren von Luftreifen
Procédé et dispositif pour le moulage et la vulcanisation de pneumatiques pour véhicules

(30) Priority: 26.03.1999 EP 99830179
(43) Date of publication of application: 27.09.2000
(73) Proprietor: PIRELLI PNEUMATICI S.p.A., 20126 Milano (IT)
(72) Inventor: Caretta, Renato, 21013 Gallarate (Varese) (IT)
(74) Representative: Tansini, Elio Fabrizio

(56) References cited:
- FR-A- 1 587 458
- GB-A- 191 212 274
- US-A- 1 407 839

## Description

The present invention relates to a method of moulding and curing tyres for vehicle wheels, comprising the following steps: disposing a tyre being processed on a toroidal support the outer surface of which substantially mates an inner surface of the tyre itself; closing the tyre and the toroidal support inside a moulding cavity defined in a vulcanization mould, said moulding cavity having walls the shape of which matches that of an outer surface of the tyre when vulcanization has been completed; pressing the tyre by its outer surface against the moulding cavity walls; transmitting heat to the tyre being processed to cause a molecular cross-linking of same.

The invention also relates to an apparatus for moulding and curing tyres for vehicle wheels, comprising: a toroidal support arranged to engage a tyre being processed, said toroidal support having an outer surface substantially mating an inner surface of the tyre itself; a vulcanization mould comprising at least two cheeks axially movable between an open condition in which they are mutually spaced apart to enable said toroidal support carrying a tyre to be cured to be introduced thereinto, and a closed condition in which they are disposed in mutual side by side relationship for enclosing the toroidal support carrying said tyre being processed within a moulding cavity confined by inner walls of the mould the shape of which matches an outer surface of the cured tyre; pressing devices for pressing the outer surface of the tyre against the inner walls of the mould; heating devices for transmitting heat to the tyre enclosed between the moulding cavity and the toroidal support.

In a tyre production cycle it is provided that, after a manufacturing process in which the different tyre components are made and/or assembled, a moulding and curing process should be carried out for the purpose of stabilizing the tyre structure to a given geometric conformation, characterized by a particular tread pattern.

To this aim, the tyre is introduced into a vulcanization mould usually comprising a pair of cheeks adapted to be axially moved close to each other, which are arranged to operate on the tyre bead and sidewalls, and at least one crown consisting of circumferentially distributed sectors susceptible of being radially moved close to each other so as to operate at the tyre tread band. In more detail, cheeks and sectors are mutually movable between an open condition, in which they are spaced apart from each other for enabling loading of the tyres being processed, and a closed condition in which they define a moulding cavity the geometric conformation of which is the same as the outer surfaces of the tyre to be obtained.

In one of the most widespread moulding methods it is provided that a vulcanization bladder of elastomer material filled with steam and/or another high-temperature and high-pressure fluid should be inflated at the inside of the tyre enclosed in the moulding cavity. In this manner the tyre is conveniently pushed against the inner walls of the moulding cavity and stabilized to the geometric configuration imposed to it, following a molecular cross-linking to which the elastomer material of which it is made is subjected, due to heat transmitted by the fluid through the bladder and by the mould walls.

Also known are moulding methods in which, instead of an inflatable vulcanization bladder, a rigid toroidal support having the same configuration as the inner surface of the tyre to be obtained is arranged within the tyre.

Such a method is disclosed for example in the European Patent EP 242 840 in which a rigid toroidal support is employed for imposing the shape and definitive sizes of the tyre enclosed in the mould. According to the above patent disclosure, the different coefficient of thermal expansion between the toroidal metal support and the raw elastomer material of which the tyre is made is utilized for achieving an appropriate moulding pressure.

In conclusion, the assembly of the parts forming the mould and the toroidal support define a closed space in the moulding cavity which is exactly shaped as the whole geometric configuration of the tyre. In this way, both the outer surfaces and the inner surfaces of the tyre are maintained in contact with rigid portions of the moulding and curing apparatus. In other words, all parts of the apparatus that are intended for setting the final tyre geometry are rigid parts, in contrast with the methods using an inflatable vulcanization bladder that, as known, constitutes a deformable portion of the mould.

It is the Applicant's feeling that, at the present state of the art, both methods using an inflatable vulcanization bladder and methods using a rigid toroidal support during the tyre vulcanization have some problems.

With reference to the methods using an inflatable bladder, it is in fact to note that the bladder deformability can easily give rise to geometric and/or structural imperfections in the tyre due to possible distortions suffered by the bladder itself, following an unbalanced expansion for example, and/or due to friction phenomena generated between the outer surfaces of the bladder and the inner surfaces of the green tyre.

Since on the bladder itself also relies the task of locking the tyre beads against the corresponding mould portions, the bladder deformability makes it difficult to reach sufficiently high pressures for bead locking. Thus, undesired misalignments of the beads relative to the geometric axis of the tyre may occur, giving then rise to distortions of the whole tyre structure. In addition, an insufficient pressure for bead locking may cause formation of flashes at the beads, due to leakage of the elastomer material between the bladder and the mould, above all at the starting instants of the vulcanization process.

The vulcanization bladder needs use of important amounts of steam since the whole inner volume of the bladder inflated in the mould cavity is to be filled up, and in addition it constitutes an obstacle to transmission of heat to the tyre by steam itself.

On the other hand, use of a rigid toroidal support instead of the inflatable vulcanization bladder makes it necessary to carry out a very precise and difficult checking of the volumes of the material employed in manufacturing the tyre.

In addition, it is presently impossible to impose an appropriate radial and/or circumferential expansion to the tyre, for achieving desired preloading effects in the reinforcing structures employed in the tyre manufacture, for example.

Furthermore, even with the aid of the rigid toroidal support, achievement of a correct and efficient heat transmission to the inside of the tyre is rather difficult.

Patent US 1,798,210 discloses a curing method according to which a previously-manufactured green tyre is fitted on a toroidal support of vulcanized rubber, to be then closed in the moulding cavity defined in a vulcanization mould. The toroidal support is completely hollow and is such shaped and sized that it cooperates with the inner walls of the moulding cavity to carry out a hermetic seal at the inner circumferential edges of the tyre. The toroidal support sizes however are lower than the inner sizes of the green tyre, so as to define a gap extending from one bead to the other between the outer surfaces of the toroidal support and the inner surfaces of the green tyre. After carrying out closure of the mould, hot water and/or another hot fluid under pressure is admitted to the toroidal support, which fluid reaches the above described gap through openings formed in the toroidal support for fulfilling all functions required for tyre moulding and curing.

In this curing process, however, manufacturing of the tyre directly on the toroidal support to be introduced into the vulcanisation mould together with the tyre itself is neither provided nor allowed.

In addition, since the toroidal support must necessarily have lower sizes than the inner sizes of the tyre, structural defects resulting from an imperfect centering and/or uncontrolled movements or distortions to which the tyre is submitted on its being closed in the moulding cavity, may easily arise.

The Applicant has become aware of the fact that important improvements may be achieved if admission of working fluid, for carrying out tyre moulding and/or heat supply for vulcanization, takes place at the inside of a gap which is formed between the toroidal support and the green tyre only following an expansion imposed to the tyre be effect of pressure. A method and an apparatus conceived on the basis of this principle are the object of a European Patent Application No. 98830473.9 in the name of the same Applicant.

In accordance with the present invention, it has also been found that important improvements may be achieved as regards tyre expansion, with advantageous effects in terms of qualitative features of the final product, if concurrently with the expansion imposed to the tyre, the inner circumferential edges of said tyre are substantially disengaged from the toroidal support and let free of moving in a controlled manner relative to the latter.

In more detail, it is an object of the invention to provide a method of moulding and curing tyres for vehicle wheels, characterized in that said pressing step takes place concurrently with an expansion imposed to the tyre, preferably by admission of a fluid under pressure to at least one gap for fluid diffusion created between the outer surface of the toroidal support and the inner surface of the tyre, an axial moving apart of the inner circumferential edges of the tyre from the toroidal support being carried out concurrently with the tyre expansion.

Preferably the axial moving apart of each inner circumferential edge of the tyre from the toroidal support is carried out by axially moving backwardly at least one radially inner annular portion of a cheek being part of said vulcanization mould and acting in resting relationship on the respective inner circumferential edge of the tyre.

It is also preferably provided that concurrently with the tyre expansion, approaching of side portions of said tyre to respective fixed portions of the cheeks initially arranged to a given distance from the side portions themselves, should be carried out.

This approaching step of the tyre side portions preferably begins before the axial moving apart step of said inner circumferential edges.

Advantageously, axial moving apart of the inner circumferential edges of the tyre is carried out to an extent correlated with the expansion imposed to the tyre.

In accordance with a preferential embodiment of the invention, before said pressing step a tyre preforming step is carried out by preliminary admission, between said outer surface of the toroidal support and the inner surface of the tyre, of a working fluid to a lower pressure than that of the fluid under pressure admitted during the pressing step.

Said radial expansion performed on pressing preferably involves an increase in the tyre circumference included between 1.5% and 3.5%, measured at an equatorial plane of the tyre itself.

The diffusion gap during the pressing step preferably has a size included between 3 mm and 14 mm measured between the inner surface of the tyre and the outer surface of the toroidal support at least at one equatorial plane of the tyre itself.

In a preferential embodiment, at least the preliminary admission of fluid under pressure for execution of the preforming step takes place through feed channels formed in the toroidal support and opening onto the outer surface thereof.

It is also preferably provided that during the preliminary admission of working fluid the tyre should be sealingly engaged at its inner circumferential edges between the walls of the moulding cavity and the outer surface of the toroidal support, to hermetically delimit the diffusion gap at the inner circumferential edges of the tyre itself.

Advantageously, heat supply preferably takes place by admission of a heating fluid to said diffusion gap.

This heating fluid may constitute, or at least be part of, the same fluid under pressure employed for carrying out the pressing step.

It may be also conveniently provided that before admission of fluid under pressure the inner tyre surface should adhere, substantially over the whole extension thereof, to the outer surface of the toroidal support, said diffusion gap being created following expansion of the tyre.

Preferably, admission of fluid under pressure takes place to an upper portion of the moulding cavity communicating with a lower portion of the cavity itself through said diffusion gap.

Also preferably carried out concurrently with said admission step, is a step of drawing fluid under pressure out of the lower portion of the moulding cavity, so as to create a pressurized fluid stream in the diffusion gap.

Conveniently, the step of disposing the tyre on the toroidal support is accomplished by directly manufacturing the tyre on the toroidal support itself.

In accordance with a further aspect of the invention, before the pressurized fluid admission, a treatment of the inner surface of the tyre is carried out for preventing permeation of the fluid under pressure through the elastomer material forming the green tyre.

In more detail, a pre-cured liner is for the purpose provided to be arranged on the inner surface of the tyre.

Said pre-cured liner can be advantageously directly formed on the toroidal support during a preliminary step of the tyre manufacture on the toroidal support itself.

In accordance with the invention, said method is put into practice by an apparatus for moulding and curing tyres for vehicle wheels, characterized in that each of said cheeks comprises a radially outer annular portion and a radially inner annular portion acting at a respective inner circumferential edge of the tyre and axially movable relative to said outer annular portion in a closed condition.

Preferably, said pressing devices are comprised of channels for feeding a fluid under pressure which are formed through the toroidal support and open onto the outer surface of the latter. In more detail, the radially inner annular portions of said cheeks are movable relative to said outer annular portions between a first position in which they cooperate with inner circumferential portions of the toroidal support to hermetically engage the tyre in a sealing manner at respective inner circumferential edges thereof, and a second position in which they are spaced apart from the inner circumferential portions of the toroidal support.

Advantageously, the outer surface of the toroidal support and the inner walls of the mould in said moulding cavity delimit a holding space for the tyre which, when the mould is closed, has a greater volume than the volume taken up by the tyre itself.

It is also provided that the outer surface of the toroidal support should have a lower extension than the extension of the inner surface of the cured tyre.

The feed channels preferably open into at least one diffusion gap for the fluid under pressure which is defined between the outer surface of the toroidal support and the inner surface of the tyre being processed.

Conveniently, the toroidal support has at least one centering shank to be engaged in a centering seating arranged in the mould for fixing the toroidal-support and tyre positioning in the moulding cavity. This centering shank extends for example along a geometric axis common to said toroidal support, said tyre being processed and said moulding cavity.

According to a further feature of the invention, the heating devices comprise at least one duct for sending a heating fluid to the feed channels.

The heating fluid may consist of the same fluid under pressure admitted by the pressurized fluid feeding devices.

It may be also conveniently provided that the toroidal support should have an elastically yielding structure in an axial direction, at least at regions corresponding to inner circumferential edges of the tyre.

Further features and advantages will become more apparent from the detailed description of a preferred non-exclusive embodiment of a method and an apparatus for moulding and curing tyres for vehicle wheels, in accordance with the present invention. This description will be taken hereinafter with reference to the accompanying drawings, given by way of non-limiting example, in which:
- Fig. 1 diagrammatically shows an apparatus in accordance with the invention seen in cross-section, with a mould arranged in an open condition for enabling removal of a cured tyre;
- Fig. 2 is a fragmentary cross-half-section to an enlarged scale relative to Fig. 1, showing a green tyre in a step coincident with, or immediately following, the mould closure;
- Fig. 3 is a cross-half-section of the tyre during an operating step in which, following admission of working fluid under pressure to the moulding cavity, an initial separation is taking place between the inner surface of the tyre and the outer surface of the toroidal support, as well as approaching of the tyre side portions to the mould cheeks;
- Fig. 4 is a cross-half-section of the apparatus during an operating step in which moving away of the tyre beads from the toroidal support has occurred;
- Fig. 5 is a cross-half-section of the tyre being processed against the mould surfaces, following admission of steam under pressure to the moulding cavity.

With reference to the figures, a moulding and curing apparatus for vehicle wheel tyres in accordance with the invention has been generally identified by reference numeral 1.

Apparatus 1 comprises a vulcanization mould 2 associated with a vulcanisation press 3, only diagrammatically shown in that it can be made in any manner convenient for a person skilled in the art. For instance, mould 2 may consist of a lower half 2a and an upper half 2b in engagement with a bedplate 3a and a closing portion 3b of press 3, respectively.

In the example shown by way of example, each of the lower 2a and upper 2b halves of mould 2 has a lower cheek 4a and an upper cheek 4b respectively, and a lower 5b and upper 5a crown of sectors.

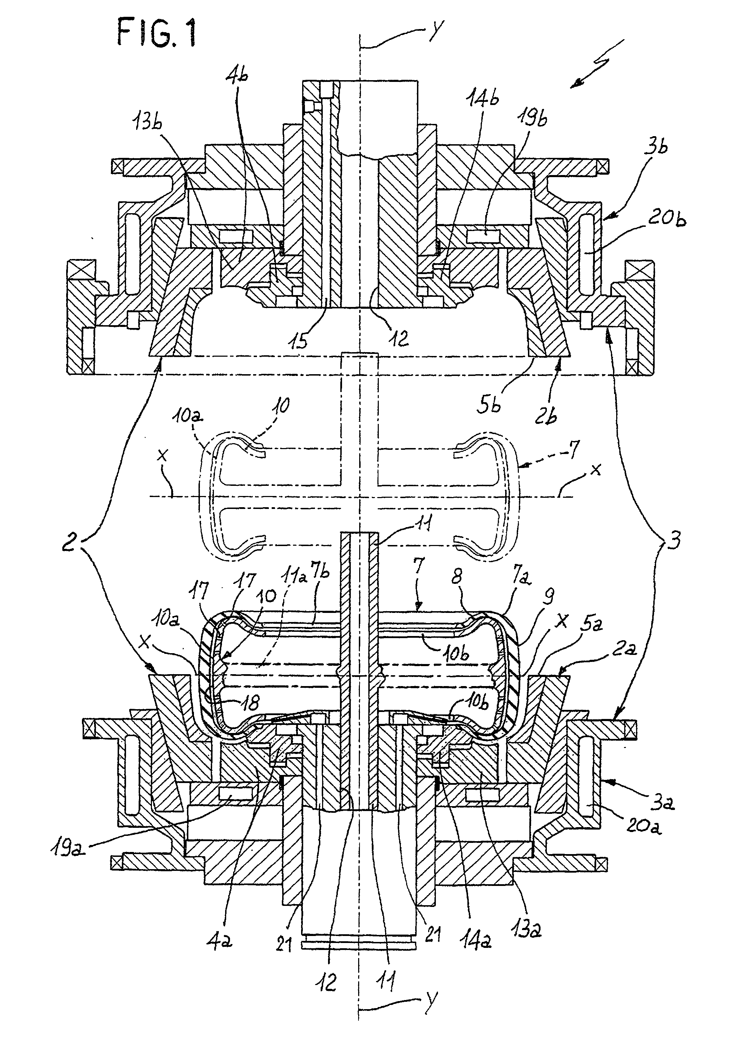

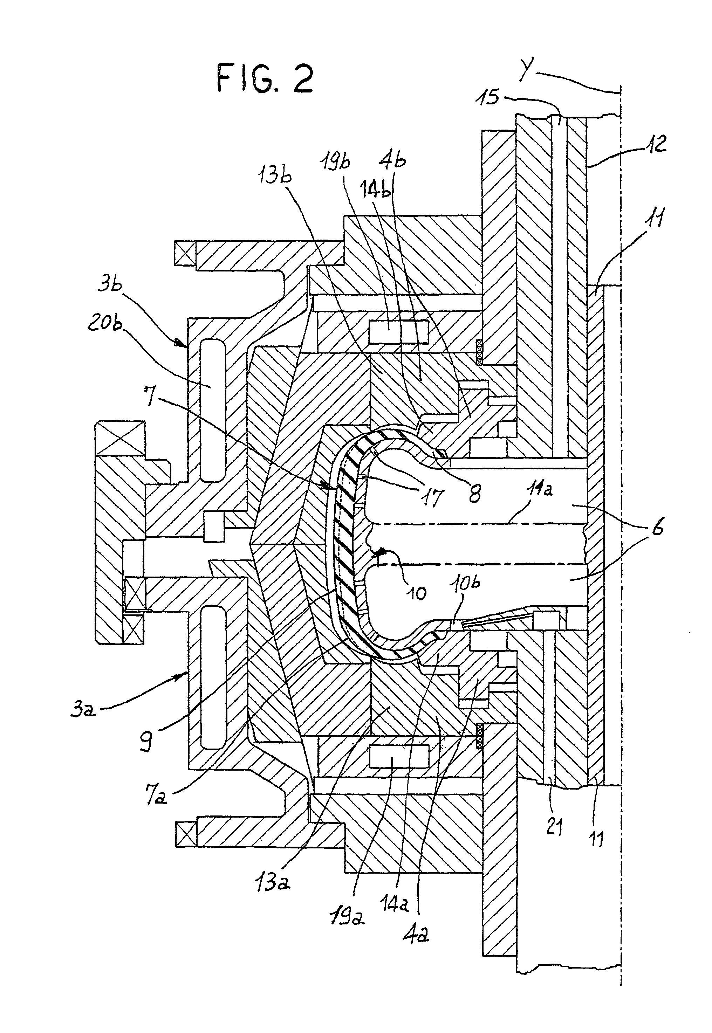

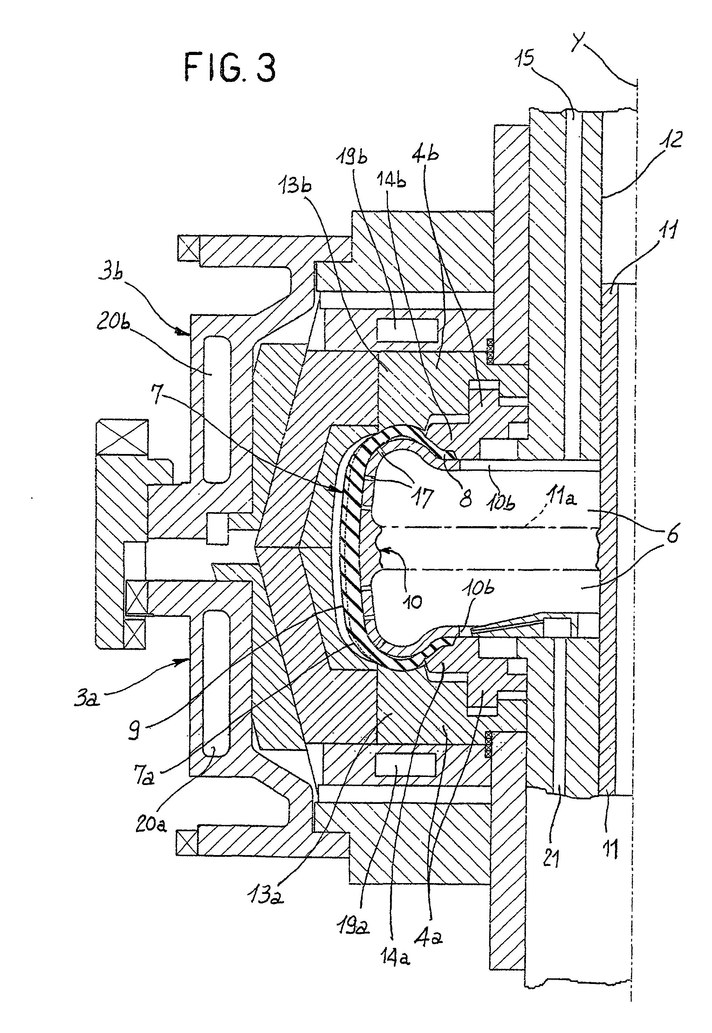

The lower 2a and upper 2b halves are mutually movable between an open condition in which they are mutually spaced apart as shown in Fig. 1, and a closed condition, shown in Figs. 2 and 3, in which they are placed close to each other to form a moulding cavity 6 delimited by the inner walls of mould 2 defined by cheeks 4a, 4b and sectors 5a, 5b. The inner walls of mould 2 have a shape matching the geometric conformation of the outer surface 7a of a tyre 7 to be obtained.

Tyre 7 usually has a carcass structure, preferably of the radial type, formed of one or more carcass plies having the respective opposite end edges in engagement with annular reinforcing structures incorporated into the inner circumferential edges 7b of the tyre itself, i.e. into the regions usually identified as "beads". Applied to the carcass structure, at a radially outer position thereof, is a belt structure comprising one or more belt layers disposed radially one upon the other in succession.

The carcass and belt structures, as well as the annular reinforcing structures at the beads have not been shown in the accompanying drawings in that they can be made in any convenient manner.

Cheeks 4a, 4b are intended for forming the outer surfaces of the opposite sidewalls 8 of tyre 7, whereas sectors 5a, 5b are intended for forming the so-called tread band 9 of the tyre itself, by creating a series of cuts and longitudinal and/or transverse grooves (not shown in the drawings) therein, suitably disposed so as to form the desired "tread pattern".

Apparatus 1 further involves use of at least one toroidal support 10 of metal material or another solid material, having an outer surface 10a reproducing or at all events substantially matching the shape of an inner surface of tyre 7. The toroidal support 10 is conveniently made up of a collapsible drum, i.e. a drum made of centripetally movable circumferential segments so that the toroidal support itself can be disassembled and easily removed from tyre 7 when the tyre manufacture has been completed.

In accordance with the method of the invention, the green tyre 7 is disposed on the toroidal support 10 before the latter is inserted, together with the tyre itself, into the vulcanization mould 2 arranged in an open condition.

In particular, engagement of tyre 7 on the toroidal support 10 can be conveniently obtained by manufacturing the tyre directly on the support itself. In this way the toroidal support 10 is advantageously utilized as a rigid model for formation and/or deposition of the different components, such as the reinforcing structures at the beads, the belt layers, sidewalls and tread band, cooperating in forming the tyre itself. Further details about the modalities of forming and/or laying down the tyre 7 components on the toroidal support 10 can be found in the European Patent Application Nos. 97830633.0 and 97830731.2 for example, in the name of the same Applicant.

Under this circumstance, the geometric conformation of the inner surface of the green tyre 7 will exactly correspond to, or at all events will substantially mate the conformation of the outer surface of the toroidal support 10. In other words, the toroidal support 10 and tyre 7 are in mutual contact relationship substantially in a homogeneous manner over the whole extension of their outer 10a and inner surfaces, respectively.

However, as better clarified in the following, the extension of the outer surface 10a of the toroidal support 10 is preferably provided to be suitably lower than the extension of the inner surface 7b of tyre 7 when vulcanization has been completed.

The toroidal support 10 is preferably provided with at least one centering shank 12 for engagement in a centering seating 12 arranged in mould 2, for establishing a precise positioning of the toroidal support itself and the tyre 7 carried by it within the moulding cavity 6. In the embodiment shown, the toroidal support 10 has two centering shanks 11 extending at opposite sides along a geometric axis Y common to the toroidal support 10, the tyre 7 and the moulding cavity 6, and arranged to be fitted into corresponding centering seatings 12 formed in the bedplate 3a and the closing portion 3b of the vulcanization press 3, respectively.

The centering shanks 11 can be connected to the toroidal support 10 by connecting linkages 11a (only diagrammatically shown) adapted to enable a centripetal movement of said circumferential segments forming the toroidal support itself.

Advantageously, each cheek 4a, 4b comprises a radially outer annular portion 13a, 13b rigidly in engagement with the bedplate 3a or the closing portion 3b of press 2 respectively, and a radially inner annular portion 14a, 13b, hereinafter referred to as "bead ring", axially movable relative to the outer annular portion 13a, 13b.

In more detail, each bead ring 14a, 14b is movable, upon command of actuators not shown in that they can be made in any convenient manner, between a first position in which it is close to an equatorial plane X-X of the moulding cavity 6 and cooperates with the inner circumferential portion 10b of the toroidal support 10 to hermetically engage the inner circumferential edge 7b of tyre 7 in a sealing manner, and a second position in which it is moved apart from the equatorial plane X-X and the toroidal support 10.

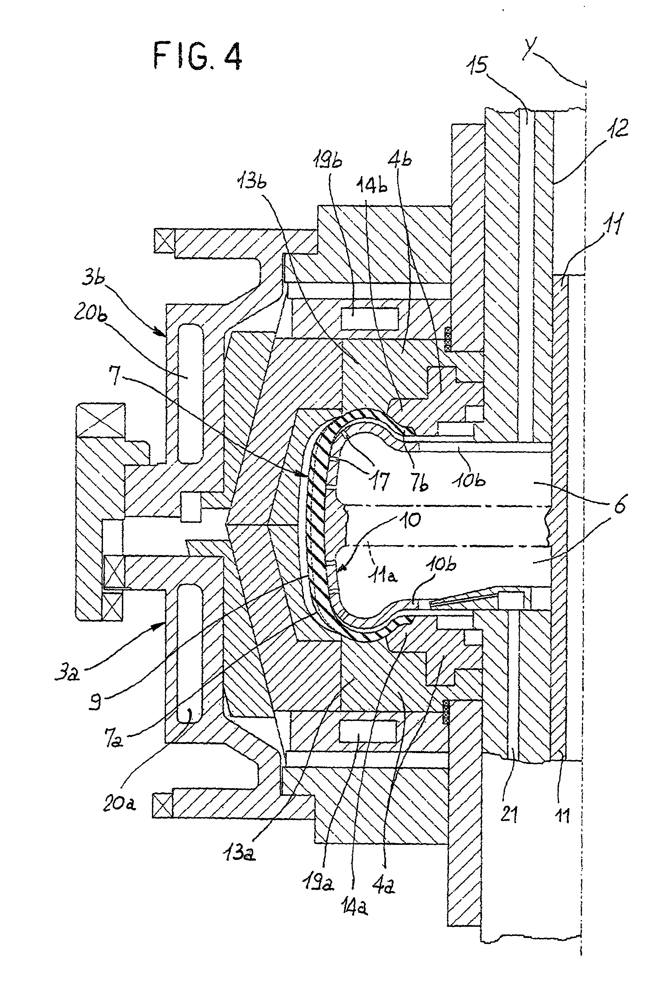

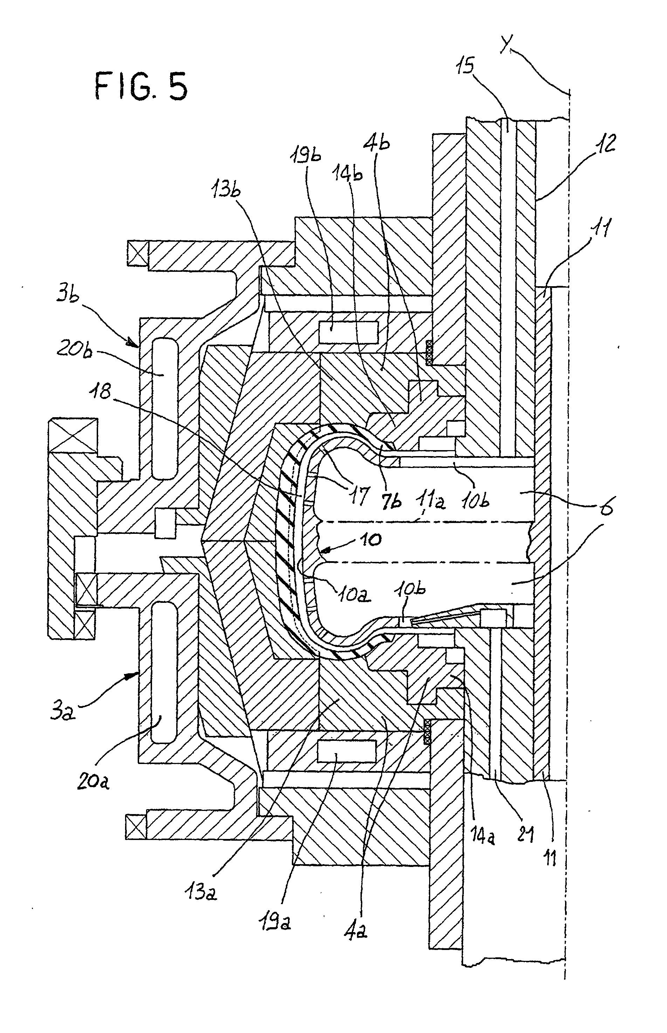

As shown in Figs. 4 and 5, in said second position the side of the bead ring 14a, 14b turned inwardly of the moulding cavity 6 substantially extends in a surface continuity relationship relative to the corresponding side of the respective outer annular portion 13a, 13b.

When positioning of the toroidal support 10 with tyre 7 on the lower portion 2a of the mould 2 has been carried out, the mould itself is brought to the closed condition.

On closure of the mould 2, or immediately after closure has been completed, each of the inner annular portions 14a, 14b of the lower 4a and upper 4b cheeks is disposed in the first work position. Consequently, each of the inner circumferential edges 7b of tyre 7 is sealingly engaged between the inner circumferential portions 10b of the toroidal support 10 and the inner annular portions 14a, 14b of the lower 4a and upper 4b cheeks. In more detail, defined between the bead ring 14a, 14b of each cheek 4a, 4b and the corresponding inner circumferential portion 10b of the toroidal support 10, is a housing seating for an inner circumferential edge 7b of tyre 7, usually known as tyre "bead".

Said bead seatings give the respective beads 7b a moulded shape of absolute geometric precision and thickness, in that said shape is determined by a direct coupling between the rigid surfaces of the toroidal support 10 and cheeks 4a, 4b of mould 2.

In addition, said bead seatings ensure a completely steady and precise centering of tyre 2 relative to axis "Y" of the moulding cavity 6.

Preferably, the toroidal support 10 is also sized in such a manner that, at least at the regions corresponding to beads 7b of tyre 7, it exhibits an elastically yielding structure in an axial direction, due to mutual moving close of cheeks 4a, 4b arranged with the respective inner annular portions 14a, 14b in the first operating position in the mould 2 closing step.

The axial deformation to which the toroidal support 10 is submitted at the regions in contact with cheeks 4a, 4b close to the tyre beads 7b is preferably included between 0.3 and 0.5 mm, so as to generate a specific pressure included between 18 and 25 bars on the surfaces in contact with the corresponding cheeks 4a, 4b. This contact pressure, during the initial moulding and curing steps of tyre 7, prevents any elastomer material leakage between the surfaces in mutual contact of the toroidal support 10 and of cheeks 4a, 4b, thereby avoiding formation of consequent flashes.

Advantageously, the outer surface 10a of the toroidal support 10 and the inner walls of mould 2 delimit, in the moulding cavity 6, a space for holding tyre 7 that, when the mould is closed, has a greater volume than the volume taken up by the tyre itself. Therefore, as can be viewed from Fig. 2, at the moment that mould 2 is closed, the inner walls of the mould, at sectors 5a, 5b, and of the outer annular portions 13a, 13b of cheeks 4a, 4b, keep some distance from the outer surface of tyre 7, whereas the inner surface of the tyre itself adheres to the outer surface 10a of the toroidal support 10 substantially over the whole extension thereof.

During this step, the tread band 9 can be at all events partly penetrated by the raised portions arranged on sectors 5a, 5b to define said tread pattern.

When closure of mould 2 has been completed, tyre 7 must be submitted to a pressing step, its outer surface 7a being against the inner walls of mould 2, concurrently with heat supply, so as to determine a molecular cross-linking of the elastomer material forming the tyre itself and the consequent geometric and structural stabilization of the latter.

For the purpose, apparatus 1 is provided with pressing devices comprising at least one primary duct 15 for feeding a fluid under pressure, formed in the closing portion 3b for example of press 3 and opening into the moulding cavity 6 so as to send a fluid under pressure into said cavity, at a radially inner position of the toroidal support 10.

Extending through the toroidal support 10 is a plurality of channels opening onto the outer surface 10a of the toroidal support itself and suitably distributed over the circumferential extension of same.

The fluid under pressure fed from the primary duct 15 to the moulding cavity 6 reaches therefore the outer surface 10a of the toroidal support 10 through the feed channels 17.

Due to pressure exercised by the fluid, tyre 7 having its inner circumferential edges 7b sealingly engaged in the above described bead seatings tends to expand within the holding space defined between the inner walls of mould 2 and the outer surface of the toroidal support 10. Thus a diffusion gap 18 filled with fluid under pressure is created between the inner surface of tyre 7 and the outer surface of the toroidal support 10.

In more detail, it is preferably provided that the pressing step should be preceded by an initial preforming step, carried out by preliminary admission to the moulding cavity 6 of a working fluid consisting of nitrogen for example, fed at a pressure included, just as an indication, between 3 and 5 bars and at all events lower than that of the fluid under pressure admitted during the pressing step.

The preforming step causes a separation of the inner surface of tyre 7 from the toroidal support 10, and an expansion of the tyre itself at the sidewalls 8, as viewed from Fig. 3. Thus, approaching of the side portions or sidewalls 8 of tyre 7 to the fixed outer annular portions 13a, 13b of the upper 4a and lower 4b cheeks is caused.

Through an axial backward movement, the inner annular portions 14a, 14b of the upper 4a and lower 4b cheeks are then brought to the second work position, as shown in Fig. 4. In this manner, concurrently with an expansion of tyre 7, an axial moving away of the inner circumferential edges 7b of tyre 7 from the toroidal support 10 is caused. It is to note that the inner circumferential edges 7b keep a steady sealing engagement against the respective inner annular portions 13a, 13b by effect of pressure exercised by the working fluid admitted to the moulding cavity 6. Concurrently with moving away of the inner circumferential edges 7b from the toroidal support 10 a true pressing step of the tyre against the inner surfaces of mould 2 is caused, simultaneously with a further expansion imposed to the tyre itself and consequent increase in the diffusion gap 18 volume, until the whole outer surface 7a of the tyre fully adheres to the inner walls of mould 2.

Preferably, admission of fluid under pressure for the purpose of carrying out the pressing step, as well as the preceding preforming step, is accomplished through the primary duct 15 in an upper portion of the moulding cavity 6. This upper portion of the moulding cavity 6 communicates with the lower portion of same through the diffusion gap 18, as well as through the spaces existing between the connecting linkages 11a of the toroidal support 10.

Simultaneously, the fluid under pressure is drawn out of the lower portion of the moulding cavity 6, through one or more discharge ducts 21 connected to the lower portion itself close to the inner circumferential edges 7b of tyre 7. Thus a stream of fluid under pressure running from the upper portion to the lower portion of the moulding cavity 6 is advantageously created, thereby ensuring an efficient and homogeneous heat supply to tyre 7.

In the pressing step, the diffusion gap 18 preferably has a size included between 3 mm and 14 mm, measured between the inner surface 7b of tyre 7 and the outer surface 10a of the toroidal support 10, at least close to an equatorial plane of the tyre which is coincident with the equatorial plane X-X of the moulding cavity 6.

It is also preferably provided that the extent of the expansion imposed to tyre 7 should involve a stretching of the belt structure thereof, with a circumference increase included between 1.5% and 3.5% measured at the equatorial plane X-X of the tyre itself.

Advantageously, this expansion does not involve any anomalous tensioning on the cords forming the tyre carcass structure, even in the case in which said tyre should have a carcass of the radial type. In fact, a full or at all events sufficient moving away of the beads from the toroidal support compensates for elongation that otherwise would be imposed to the carcass cords should the beads, during the tyre expansion, be maintained locked against the toroidal support 10. The pressurized fluid admitted to the diffusion gap 18 during the pressing step can consist of nitrogen for example, or another inert gas.

However, in a preferential embodiment, it is provided that, in addition to or in place of the inert gas, steam should be employed, which must preferably be overheated to a temperature preferably included between 170°C and 210°C, fed with a gradually increasing pressure until a value included between 16 and 30 bars, preferably of about 18 bars, is reached. Under this circumstance, the pressurized fluid sent to the feed channels 17 for tyre moulding also fulfils the function, in part or in full, of heating the fluid for transmitting the necessary heat for tyre vulcanization to the tyre itself.

The primary duct 15, moulding cavity 6 and feed channels 17, together with further canalizations 19a, 19b, 20a, 20b adjacent to cheeks 4a, 4b and sectors 5a, 5b of mould 2, supplied with steam under pressure at high temperature, also perform the function of heating devices for the mould 2 walls to transmit to tyre 7, also from the outside to the inside, the necessary heat for molecular cross-linking of the tyre itself.

In accordance with a further aspect of the invention, before admission of fluid under pressure, a treatment is preferably carried out on the inner surface of tyre 7 to prevent steam under pressure from permeating through the raw elastomer material of which the tyre is made, above all during the initial steps of the vulcanization cycle. In more detail, according to the method in reference arrangement of at least one pre-cured liner on the inner surface of the tyre is provided for the purpose. Advantageously, the pre-cured liner (not shown in the figures) can be directly formed on the toroidal support 10 during a step preceding manufacturing of tyre 7 on the toroidal support, or applied to the outer surface 10a of the toroidal support 10 in the form of a skim coat.

Further specifications on the composition and features of the liner are described in the European Patent Application 98830696.5 in the name of the same Applicant, to which please refer for possible further explanations.

The invention achieves important advantages.

In fact, the possibility of manufacturing the tyre directly on a rigid toroidal support ensures high features to the tyre in terms of geometric precision and structural uniformity.

Employment of a rigid toroidal support during the moulding and curing step enables a perfect centering of the tyre within the vulcanization mould to be achieved, and allows a greater control of the geometric and structural features of the tyre itself during the expansion step as compared with traditional processes using inflatable vulcanization bladders. This geometric and structural control is also further improved by an efficient anchoring of beads 7b between cheeks 4a, 4b and the toroidal support 10, as previously described, without any risk of flash formation due to leakage of the elastomer material, not even during the initial steps of the moulding and curing process.

In addition, admission of steam under pressure and at a given temperature to the diffusion gap formed between the toroidal support and the inner surface of the tyre ensures a greater transmission of heat to the tyre, which transmission is not hindered by bodies of elastomer material such as the vulcanization bladders of the known art, and is more efficient than that obtainable by contact with solid bodies such as the toroidal support itself.

Use of a toroidal support during the vulcanization step further offers the possibility of greatly reducing the volume taken up by steam within the tyre so that vulcanization is achieved with greatly reduced steam amounts, as compared with the known art.

Admission of steam or another fluid under pressure between the toroidal support and the inner tyre surface also enables appropriate pre-loading forces to be produced, through tyre expansion, in the inner reinforcing structures of the tyre itself, which condition is often sought for, in order to achieve given behavioural qualities.

In particular, advantageously the invention makes it possible to cause a stretching with consequent pre-loading forces in the belt structure of the tyre, without imposing too much tensioning to the cords forming the ply or plies belonging to the carcass structure, even when the tyre has a carcass structure of the radial type with a very low profile, i.e. with a low value of the sectional height/width ratio (H/C ≤ 0.65), and/or made of metallic cords or at all event of cords having a high modulus of elasticity.

Arrangement of a pre-cured elastomer layer on the inner surface of the tyre also eliminates the risk that a direct contact of steam with the inner surfaces of the tyre may cause diffusion of water particles in the layers of raw blend, above all during the initial steps of the vulcanization process.

Obviously, many modifications and variations may be made to the invention as described. For instance, the diffusion gap 18 may be provided to be at least partly defined by a surface lowering arranged on the outer surface 10a of the toroidal support 10. In this case too, due to admission of fluid under pressure, an expansion of tyre 7 increasing the volume of the diffusion gap 18 is achieved.

## Claims

1. A method of moulding and curing tyres for vehicle wheels, comprising the following steps:
- disposing a tyre being processed (7) on a toroidal support (10) the outer surface (10a) of which substantially mates an inner surface (7b) of the tyre itself;
- closing the tyre (7) and the toroidal support (10) inside a moulding cavity (6) defined in a vulcanization mould, said moulding cavity having walls the shape of which matches that of an outer surface (7a) of the tyre (7) when vulcanization has been completed;
- pressing the tyre (7) by its outer surface (7a) against the moulding cavity (6) walls;
- transmitting heat to the tyre being processed (7) to cause a molecular cross-linking of same,
**characterized in that**
- during said pressing step an expansion is imposed to the tyre (7),
- an axial moving apart of the inner circumferential edges (7b) of the tyre from the equatorial plane (X-X) of the toroidal support (10) is carried out concurrently with the tyre (7) expansion.

2. A method as claimed in claim 1, wherein the tyre expansion is carried out by a step of admitting a fluid under pressure to at least one gap (18) for fluid diffusion created between the outer surface (10a) of the toroidal support (10) and the inner surface (7b) of the tyre (7).

3. A method as claimed in claim 1, wherein the axial moving apart of each inner circumferential edge (7b) of the tyre (7) from the toroidal support is carried out by axially moving backwardly at least one radially inner portion (14a, 14b) of a cheek (4a, 4b) being part of said vulcanization mould (2) and acting in resting relationship on the respective inner circumferential edge (7b) of the tyre (7).

4. A method as claimed in claim 3, wherein, concurrently with the tyre (7) expansion, approaching of side portions (8) of said tyre (7) to respective fixed portions (13a, 13b) of the cheeks (4a, 4b) is carried out.

5. A method as claimed in claim 4, wherein the approaching step of the tyre (7) side portions (8) begins before the axial moving apart step of said inner circumferential edges (7b).

6. A method as claimed in claim 1, wherein axial moving apart of the inner circumferential edges (7b) of the tyre (7) is carried out to an extent correlated with the expansion imposed to the tyre (7).

7. A method as claimed in claim 2, wherein before said pressing step a tyre (7) preforming step is carried out by preliminary admission, between said outer surface (10a) of the toroidal support (10) and the inner surface of the tyre (7), of a working fluid to a lower pressure than that of the fluid under pressure admitted during the pressing step.

8. A method as claimed in claim 7, wherein the preliminary admission of fluid under pressure for execution of the preforming step takes place through feed channels (17) formed in the toroidal support (10) and opening onto the outer surface (10a) thereof.

9. A method as claimed in claim 7, wherein during the preliminary admission of working fluid the tyre (7) is sealingly engaged at its inner circumferential edges (7a) between the walls of the mould (2) and the outer surface (10a) of the toroidal support (10).

10. A method as claimed in claim 2, wherein heat supply takes place by admission of a heating fluid to said diffusion gap (18), said heating fluid comprising the same fluid under pressure employed for carrying out the pressing step.

11. A method as claimed in claim 2, wherein before admission of fluid under pressure the inner tyre (7) surface adheres, substantially over the whole extension thereof, to the outer surface (10a) of the toroidal support (10), said diffusion gap (18) being created following expansion of the tyre (7).

12. A method as claimed in claim 2, wherein admission of fluid under pressure takes place to an upper portion of the moulding cavity (6) communicating with a lower portion of the cavity itself through said diffusion gap (18).

13. A method as claimed in claim 12, further comprising a step of drawing fluid under pressure out of the lower portion of the moulding cavity (6), carried out concurrently with said admission step, so as to create a pressurized fluid stream in the diffusion gap.

14. A method as claimed in claim 2, wherein said diffusion gap (18) has a size included between 3 mm and 14 mm measured between the inner surface (7b) of the tyre (7) and the outer surface (10a) of the toroidal support (10) at least at one equatorial plane (X-X) of the tyre itself.

15. A method as claimed in claim 1, wherein said expansion involves an increase in the tyre circumference included between 1.5% and 3.5%, measured at an equatorial plane (X-X) of the tyre itself.

16. A method as claimed in claim 1, wherein the step of disposing the tyre (7) on the toroidal support (10) is accomplished by directly manufacturing the tyre on the toroidal support itself.

17. A method as claimed in claim 1, wherein, before the pressurized fluid admission, a treatment of the inner surface of the tyre (7) is carried out for preventing permeation of the fluid under pressure through the elastomer material forming the green tyre.

18. A method as claimed in claim 1, wherein a pre-cured liner is directly formed on the toroidal support (10) during a preliminary step of the tyre (7) manufacture, for preventing permeation of said fluid under pressure through the elastomer material forming the green tyre.

19. An apparatus for moulding and curing tyres for vehicle wheels, comprising:
- a toroidal support (10) arranged to engage a tyre being processed (7), said toroidal support (10) having an outer surface (10a) substantially mating an inner surface (7b) of the tyre itself;
- a vulcanization mould (2) comprising at least two cheeks (4a, 4b) axially movable between an open condition in which they are mutually spaced apart to enable said toroidal support (10) carrying a tyre to be cured to be introduced thereinto, and a closed condition in which they are disposed in mutual side by side relationship for enclosing the toroidal support (10) carrying said tyre being processed (7) within a moulding cavity (6) confined by inner walls of the mould the shape of which matches an outer surface (7a) of the cured tyre (7);
- pressing devices (13, 18) for pressing the outer surface (7a) of the tyre (7) against the inner walls of the mould (2);
- heating devices for transmitting heat to the tyre (7) enclosed between the moulding cavity (6) and the toroidal support (10);
**characterized in that** each of said cheeks (4a, 4b) comprises a radially outer annular portion (13a, 13b) and a radially inner annular portion (14a, 14b) acting at a respective inner circumferential edge (7b) of the tyre (7) and axially movable relative to said outer annular portion (13a, 13b).

20. An apparatus as claimed in claim 19, wherein said pressing devices are comprised of channels (17) for feeding a fluid under pressure which are formed through the toroidal support (10) and open onto the outer surface (10a) of the latter.

21. An apparatus as claimed in claim 19, wherein the radially inner annular portions (14a, 14b) of said cheeks (4a, 4b) are movable relative to said outer annular portions (13a, 13b) between a first position in which they cooperate with inner circumferential portions of the toroidal support (10) to hermetically engage the tyre (7) in a sealing manner at respective inner circumferential edges (7b) thereof, and a second position in which they are spaced apart from the toroidal support (10).

22. An apparatus as claimed in claim 19, wherein the outer surface (10a) of the toroidal support (10) and the inner walls of the mould (2) in said moulding cavity (6) delimit a holding space for the tyre (7) which, when the mould is closed, has a greater volume than the volume taken up by the tyre itself.

23. An apparatus as claimed in claim 20, wherein said feed channels (17) open into at least one diffusion gap (18) for the fluid under pressure which is defined between the outer surface (10a) of the toroidal support (10) and the inner surface (7b) of the tyre being processed (7).

24. An apparatus as claimed in claim 19, wherein the outer surface (10a) of the toroidal support (10) has a lower extension than the extension of the inner surface (7b) of the cured tyre (7).

25. An apparatus as claimed in claim 19, wherein said toroidal support (10) has at least one centering shank (11) to be engaged in a centering seating (12) associated with the mould (2) for fixing the toroidal-support (10) and tyre (7) positioning in the moulding cavity (6).

26. An apparatus as claimed in claim 25, wherein said centering shank (11) extends along a geometric axis common to said toroidal support (10), said tyre being processed (7) and said moulding cavity (6).

27. An apparatus as claimed in claim 20, wherein said heating devices comprise at least one duct (15) for sending a heating fluid to the feed channels (17).

28. An apparatus as claimed in claim 19, wherein said heating fluid comprises the same fluid under pressure admitted by the pressurized fluid feeding devices (15-21).

29. An apparatus as claimed in claim 19, wherein said toroidal support (10) has an elastically yielding structure in an axial direction, at least at regions corresponding to inner circumferential edges (7b) of the tyre (7).

## Patentansprüche

1. Verfahren zum Ausformen und Vulkanisieren von Reifen für Fahrzeugräder, welches die folgenden Schritte aufweist:
- Anordnen eines zu behandelnden Reifens (7) auf einem toroidförmigen Träger (10), dessen Außenfläche (10a) im Wesentlichen an einer Innenfläche (7b) des Reifens selbst angreift,
- Einschließen des Reifens (7) und des toroidförmigen Trägers (10) in einen Formhohlraum (6), der in einer Vulkanisierform ausgebildet ist, wobei der Formhohlraum Wände hat, deren Form an die einer Außenfläche (7a) des Reifens (7) angepasst ist, wenn die Vulkanisation abgeschlossen worden ist,
- Pressen des Reifens (7) mit seiner Außenfläche (7a) gegen die Wände des Formhohlraums (6) und
- Übertragen von Wärme auf den zu behandelnden Reifen (7) zur Herbeiführung einer molekularen Vernetzung,
**dadurch gekennzeichnet,**
- **dass** während des Pressschritts der Reifen (7) einer Expansion unterworfen wird und
- **dass** gleichzeitig zu der Expansion des Reifens (7) ein axiales Voneinanderwegbewegen der inneren Umfangsränder (7b) des Reifens aus der Äquatorialebene (X-X) des toroidförmigen Trägers (10) ausgeführt wird.

2. Verfahren nach Anspruch 1, bei welchem die Reifenexpansion durch einen Schritt ausgeführt wird, bei dem ein Druckfluid wenigstens einem Spalt (18) für eine Fluidausbreitung zugeführt wird, die zwischen der Außenfläche (10a) des toroidförmigen Trägers (10) und der Innenfläche (7b) des Reifens (7) erzeugt wird.

3. Verfahren nach Anspruch 1, bei welchem das axiale Voneinanderwegbewegen jedes inneren Umfangsrands (7b) des Reifens (7) von dem toroidförmigen Träger durch axiales Rückwärtsbewegen wenigstens eines radial inneren Abschnitts (14a, 14b) eines Backens (4a, 4b) ausgeführt wird, der Teil der Vulkanisierform (2) ist und in Ruhebeziehung auf den jeweiligen inneren Umfangsrand (7b) des Reifens (7) wirkt.

4. Verfahren nach Anspruch 3, bei welchem gleichzeitig zur Expansion des Reifens (7) ein Annähern der Seitenabschnitte (8) des Reifens (7) an entsprechende feststehende Teile (13a, 13b) der Backen (4a, 4b) ausgeführt wird.

5. Verfahren nach Anspruch 4, bei welchem der Annäherungsschritt der Seitenabschnitte (8) des Reifens (7) vor dem Schritt des axialen Wegbewegens der inneren Umfangsränder (7b) beginnt.

6. Verfahren nach Anspruch 1, bei welchem das axiale Voneinanderwegbewegen der inneren Umfangsränder (7b) des Reifens (7) in einem Ausmaß ausgeführt wird, das mit der auf den Reifen (7) ausgeübten Expansion korriliert.

7. Verfahren nach Anspruch 2, bei welchem vor dem Pressschritt ein Vorformschritt für den Reifen (7) durchgeführt wird, indem einleitend zwischen die Außenfläche (10a) des toroidförmigen Trägers (10) und die Innenfläche des Reifens (7) ein Arbeitsfluid mit einem Druck eingeführt wird, der niedriger ist als der des Druckfluids, das während des Pressschritts zugeführt wird.

8. Verfahren nach Anspruch 7, bei welchem die einleitende Zuführung von Druckfluid für die Ausführung des Vorformschritts durch Zuführkanäle (17) erfolgt, die in dem toroidförmigen Träger (10) ausgebildet sind und auf seiner Außenfläche (10a) münden.

9. Verfahren nach Anspruch 7, bei welchem während der einleitenden Zuführung von Arbeitsfluid der Reifen abdichtend an seinen inneren Umfangsrändern (7a) zwischen den Wänden der Form (7) und der Außenfläche (10a) des toroidförmigen Trägers (10) in Eingriff steht.

10. Verfahren nach Anspruch 2, bei welchem die Wärmezufuhr durch Zuführen eines Heizfluids zum Ausbreitungsspalt (18) erfolgt, das das gleiche Fluid wie das Druckfluid ist, das für die Durchführung des Pressschritts verwendet wird.

11. Verfahren nach Anspruch 2, bei welchem vor dem Zuführen von Druckfluid die Innenfläche des Reifens (7) im Wesentlichen über ihrer ganzen Erstreckung an der Außenfläche (10a) des toroidförmigen Trägers (10) haftet, wobei der Ausbreitungsspalt (18) auf die Expansion des Reifens (7) folgend erzeugt wird.

12. Verfahren nach Anspruch 2, bei welchem die Zuführung von Druckfluid zu einem oberen Abschnitt des Formhohlraums (6) erfolgt, der mit einem unteren Abschnitt des Hohlraums selbst über den Ausbreitungsspalt (18) in Verbindung steht.

13. Verfahren nach Anspruch 12, welches weiterhin einen Schritt aufweist, das Abziehen von Druckfluids aus dem unteren Abschnitt des Formhohlraums (6) gleichzeitig zu dem Zuführungsschritt auszuführen, um so einen Druckfluidstrom in den Ausbreitungsspalt zu erzeugen.

14. Verfahren nach Anspruch 2, bei welchem der Ausbreitungsspalt (18) eine Größe zwischen 3 mm und 14 mm gemessen zwischen der Innenfläche (7b) des Reifens (7) und der Außenfläche (10a) des toroidförmigen Trägers (10) auf wenigstens einer Äquatorialebene (X-X) des Reifens selbst hat.

15. Verfahren nach Anspruch 1, bei welchem die Expansion eine Zunahme des Reifenumfangs zwischen 1,5% und 3,5% gemessen an einer Äquatorialebene (X-X) des Reifens selbst einschließt.

16. Verfahren nach Anspruch 1, bei welchem der Schritt des Anordnens des Reifens (7) auf dem toroidförmigen Träger (10) durch direkte Herstellung des Reifens auf dem toroidförmigen Träger selbst ausgeführt wird.

17. Verfahren nach Anspruch 1, bei welchem vor der Druckfluidzuführung eine Behandlung der Innenfläche des Reifens (7) ausgeführt wird, um ein Durchdringen von Druckfluid durch das den Rohreifen bildende elastomere Material zu verhindern.

18. Verfahren nach Anspruch 1, bei welchem ein vorvulkanisiertes Futter direkt an dem toroidförmigen Träger (10) während eines einleitenden Schritts der Fertigung des Reifens (7) ausgebildet wird, um das Durchdringen des Druckfluids durch das den Rohreifen bildende elastomere Material zu verhindern.

19. Vorrichtung zum Ausformen und Vulkanisieren von Reifen für Fahrzeugräder
- mit einem toroidförmigen Träger (10), der für den Eingriff mit einem zu behandelnden Reifen (7) angeordnet ist und eine Außenfläche (10a) hat, die im Wesentlichen an eine Innenfläche (7b) des Reifens selbst angepasst ist,
- mit einer Vulkanisierform (2), die wenigstens zwei Backen (4a, 4b) hat, die zwischen einem offenen Zustand, in welchem sie gegenseitig im Abstand angeordnet sind, um das Einführen des toroidförmigen Trägers zu ermöglichen, der einen zu vulkanisierenden Reifen trägt, und einem geschlossenen Zustand axial bewegbar sind, in dem sie in einer gegenseitigen Beziehung Seite an Seite zum Umschliessen des den zu behandelnden Reifen (7) tragenden toroidförmigen Trägers (10) in einem Formhohlraum (6) angeordnet sind, der von den Innenwänden der Form begrenzt wird, deren Gestalt die Außenfläche (7a) des vulkanisierten Reifens (7) angepasst ist,
- mit Presseinrichtungen (13, 18) zum Pressen der Außenfläche (7a) des Reifens (7) gegen die Innenwände der Form (2) und
- mit Heizeinrichtungen zum Übertragen von Wärme auf den zwischen dem Formhohlraum (6) und dem toroidförmigen Träger (10) eingeschlossenen Reifen (7),
**dadurch gekennzeichnet, dass** jeder der Backen (4a, 4b) einen radial äußeren ringförmigen Abschnitt (13a, 13b) und einen radial inneren ringförmigen Abschnitt (14a, 14b) hat, der an einem entsprechenden inneren Umfangsrand (7b) des Reifens (7) wirkt und axial bezüglich des äußeren ringförmigen Abschnitts (13a, 13b) bewegbar ist.

20. Vorrichtung nach Anspruch 19, bei welchem die Presseinrichtungen Kanäle (17) zum Zuführen eines Druckfluids aufweisen, die durch den toroidförmigen Träger (10) hindurch ausgebildet sind und auf dessen Außenfläche (10a) münden.

21. Vorrichtung nach Anspruch 19, bei welchem die radial inneren ringförmigen Abschnitte (14a, 14b) der Backen (4a, 4b) bezüglich der äußeren ringförmigen Abschnitte (13a, 13b) zwischen einer ersten Position, in welcher sie mit den inneren Umfangsabschnitten des toroidförmigen Trägers (10) für ein hermetisches Angreifen am Reifen (7) in abdichtender Weise an entsprechenden inneren Umfangsrändern (7b) von ihm zusammenwirken, und einer zweiten Position bewegbar sind, in der sie von dem toroidförmigen Träger (10) beabstandet sind.

22. Vorrichtung nach Anspruch 19, bei welcher die Außenfläche (10a) des toroidförmigen Trägers (10) und die Innenwände der Form (2) in dem Formhohlraum (6) einen Halteraum für den Reifen (7) begrenzen, der, wenn die Form geschlossen ist, ein Volumen hat, das größer ist als das von dem Reifen selbst eingenommene Volumen ist.

23. Vorrichtung nach Anspruch 20, bei welchem die Zuführkanäle (17) in wenigstens einen Ausbreitungsspalt (18) für das Druckfluid münden, der zwischen der Außenfläche (10a) des toroidförmigen Trägers (10) und der Innenfläche (7b) des zu behandelnden Reifens (7) gebildet wird.

24. Vorrichtung nach Anspruch 19, bei welcher die Außenfläche (10a) des toroidförmigen Trägers (10) eine Erstreckung hat, die geringer ist als die Erstreckung der Innenfläche (7b) des vulkanisierten Reifens (7).

25. Vorrichtung nach Anspruch 19, bei welcher der toroidförmige Träger (10) wenigstens einen Zentrierschaft (11) für den Eingriff in einem der Form (2) zugeordneten Zentriersitz (12) zum Fixieren der Positionierung des toroidförmigen Trägers (10) und des Reifens (7) in dem Formhohlraum (6) hat.

26. Vorrichtung nach Anspruch 25, bei welcher der Zentrierschaft (11) sich längs einer geometrischen Achse erstreckt, die auch der toroidförmige Träger (10), der zu behandelnde Reifen (7) und der Formhohlraum (6) hat.

27. Vorrichtung nach Anspruch 20, bei welcher die Heizeinrichtungen wenigstens eine Leitung (15) zum Zuführen eines Heizfluids zu den Zuführkanälen (17) aufweisen.

28. Vorrichtung nach Anspruch 19, bei welcher das Heizfluid das gleiche Druckfluid ist, das durch die Druckfluidzuführeinrichtungen (15 bis 21) zugeführt wird.

29. Vorrichtung nach Anspruch 19, bei welchem der toroidförmige Träger (10) einen in einer Axialrichtung elastisch nachgebenden Aufbau wenigstens an Bereichen hat, die den inneren Umfangsrändern (7b) des Reifens (7) entsprechen.

## Revendications

1. Procédé de moulage et de vulcanisation de pneumatiques pour roues de véhicule, comprenant les étapes consistant à :
- placer un pneu en cours de traitement (7) sur un support toroïdal (10) dont la surface extérieure (10a) est substantiellement conjuguée à une surface intérieure (7b) du pneumatique ;
- fermer le pneumatique (7) et le support toroïdal (10) à l'intérieur d'une cavité de moulage (6) définie dans un moule de vulcanisation, ladite cavité de moulage ayant des parois dont la forme est conjuguée à celle d'une surface extérieure (7a) du pneu (7) quand la vulcanisation est terminée ;
- presser le pneu (7) par sa surface extérieure (7a) contre les parois de la cavité de moulage (6) ;
- transmettre de la chaleur au pneu en cours de traitement (7) pour provoquer une réticulation moléculaire de ce dernier,
**caractérisé en ce que**
- au cours de ladite étape de pressage, une dilatation est imposée au pneu (7),
- un éloignement axial des bords circonférentiels intérieurs (7b) du pneu à partir du plan équatorial (X-X) du support toroïdal (10) est effectué simultanément à la dilatation du pneu (7).

2. Procédé selon la revendication 1, dans lequel la dilatation du pneu est effectuée par une étape consistant à admettre un fluide sous pression dans au moins un interstice (18) pour la diffusion de fluide créé entre la surface extérieure (10a) du support toroïdal (10) et la surface intérieure (7b) du pneu (7).

3. Procédé selon la revendication 1, dans lequel l'éloignement axial de chaque bord circonférentiel intérieur (7b) du pneu à partir du support toroïdal est effectué en déplaçant axialement vers l'arrière au moins une partie radialement intérieure (14a, 14b) d'une joue (4a, 4b) faisant partie dudit moule de vulcanisation (2) et agissant en relation de repos sur le bord circonférentiel intérieur respectif (7b) du pneu (7).

4. Procédé selon la revendication 3, dans lequel on effectue, simultanément à la dilatation du pneu (7), une approche de parties latérales (8) dudit pneu (7) vers des parties fixes respectives (13a, 13b) des joues (4a, 4b).

5. Procédé selon la revendication 4, dans lequel l'étape d'approche des parties latérales (8) du pneu (7) commence avant l'étape d'éloignement axial desdits bords circonférentiels intérieurs (7b).

6. Procédé selon la revendication 1, dans lequel l'éloignement axial des bords circonférentiels intérieurs (7b) du pneu (7) est effectué jusqu'à une étendue liée à la dilatation imposée au pneu (7).

7. Procédé selon la revendication 2, dans lequel avant ladite étape de pressage, on effectue une étape de préformage du pneu (7) par l'admission préliminaire, entre ladite surface extérieurs (10a) du support toroïdal (10) et la surface intérieure du pneu (7), d'un fluide de travail à une pression inférieure à celle du fluide sous pression admis pendant l'étape de pressage.

8. Procédé selon la revendication 7, dans lequel l'admission préliminaire de fluide sous pression pour l'exécution de l'étape de préformage se fait par des canaux d'alimentation (17) formés dans le support toroïdal (10) et débouchant à la surface extérieure (10a) de celui-ci.

9. Procédé selon la revendication 7, dans lequel pendant l'admission préliminaire de fluide de travail on engage le pneu (7) de manière étanche au niveau de ses bords circonférentiels intérieurs (7a) entre les parois du moule (2) et la surface extérieure (10a) du support toroïdal (10).

10. Procédé selon la revendication 2, dans lequel le chauffage a lieu par admission d'un fluide chauffant dans ledit interstice de diffusion (18), ledit fluide chauffant comprenant le même fluide sous pression utilisé pour exécuter l'étape de pressage.

11. Procédé selon la revendication 2, dans lequel avant l'admission de fluide sous pression, la surface intérieure du pneu (7) adhère, sur sensiblement toute son étendue, à la surface extérieure (10a) du support toroïdal (10), ledit interstice de diffusion (18) étant créé suite à la dilatation du pneu (7).

12. Procédé selon la revendication 2, dans lequel l'admission de fluide sous pression a lieu à une partie supérieure de la cavité de moulage (6) communiquant avec une partie inférieure de 1a cavité par ledit interstice de diffusion (18).

13. Procédé selon la revendication 12, comprenant en outre une étape consistant à extraire du fluide sous pression de la partie inférieure de la cavité de moulage (6), exécutée simultanément à ladite étape d'admission, afin de créer un courant de fluide sous pression dans l'interstice de diffusion.

14. Procédé selon la revendication 2, dans lequel ledit interstice de diffusion (18) a une taille comprise entre 3 mm et 14 mm, mesurée entre la surface intérieure (7b) du pneu (7) et la surface extérieure (10a) du support toroïdal (10) au moins au niveau d'un plan équatorial (X-X) du pneu.

15. Procédé selon la revendication 1, dans lequel ladite dilatation implique une augmentation de la circonférence du pneu comprise entre 1,5 % et 3,5 %, mesurée au niveau d'un plan équatorial (X-X) du pneu.

16. Procédé selon la revendication 1, dans lequel l'étape consistant à placer le pneu (7) sur le support toroïdal (10) est accomplie en fabriquant directement le pneu sur le support toroïdal.

17. Procédé selon la revendication 1, dans lequel, avant l'admission de fluide sous pression, on effectue un traitement de la surface intérieure du pneu (7) pour empêcher la pénétration du fluide sous pression à travers le matériau élastomère formant le pneu vert.

18. Procédé selon la revendication 1, dans lequel une garniture pré-durcie est formée directement sur le support toroïdal (10) pendant une étape préliminaire de la fabrication du pneu (7), pour empêcher la pénétration dudit fluide sous pression à travers le matériau élastomère formant le pneu vert.

19. Appareil de moulage et de vulcanisation de pneumatiques pour roues de véhicule, comprenant :
- un support toroïdal (10) arrangé pour engager un pneu en cours de traitement (7), ledit support toroïdal (10) comportant une surface extérieure (10a) substantiellement conjuguée à une surface intérieure (7b) du pneumatique ;
- un moule de vulcanisation (2) comprenant au moins deux joues (4a, 4b) axialement mobiles entre un état ouvert dans lequel elles sont mutuellement espacées pour permettre audit support toroïdal (10) supportant un pneu à durcir d'être introduit dedans, et un état fermé dans lequel elles sont placées côte à côte pour enfermer le support toroïdal (10) supportant ledit pneu en cours de traitement (7) à l'intérieur d'une cavité de moulage (6) confinée par des parois intérieures du moule dont la forme est conjuguée à une surface extérieure (7a) du pneu durci (7) ;
- des dispositifs de pressage (13, 18) pour presser la surface extérieure (7a) du pneu (7) contre les parois intérieures du moule (2) ;
- des dispositifs de chauffage pour transmettre de la chaleur au pneu (7) enfermé entre la cavité de moulage (6) et le support toroïdal (10) ;
**caractérisé en ce que** chacune desdites joues (4a, 4b) comprend une partie annulaire radialement extérieure (13a, 13b) et une partie annulaire radialement intérieure (14a, 14b) agissant au niveau d'un bord circonférentiel intérieur respectif (7b) du pneu (7) et axialement mobile par rapport à ladite partie annulaire extérieure (13a, 13b).

20. Appareil selon la revendication 19, dans lequel lesdits dispositifs de pressage sont constitués de canaux (17) pour envoyer un fluide sous pression qui sont formés à travers le support toroïdal (10) et débouchant à la surface extérieure (10a) de ce dernier.

21. Appareil selon la revendication 19, dans lequel les parties annulaires radialement intérieures (14a, 14b) desdites joues (4a, 4b) sont mobiles par rapport auxdites parties annulaires extérieures (13a, 13b) entre une première position dans laquelle elles coopèrent avec des circonférentielles intérieures du support toroïdal (10) pour engager de façon hermétique le pneu (7) d'une manière étanche au niveau de ses bords circonférentiels intérieurs respectifs (7b), et une deuxième position dans laquelle elles sont espacées par rapport au support toroïdal (10).

22. Appareil selon la revendication 19, dans lequel la surface extérieure (10a) du support toroïdal (10) et les parois intérieures du moule (2) dans ladite cavité de moulage (6) délimitent un espace de retenue pour le pneu (7) qui, lorsque le moule est fermé, a un volume supérieur au volume pris par le pneu lui-même.

23. Appareil selon la revendication 20, dans lequel lesdits canaux d'alimentation (17) débouchent dans au moins un interstice de diffusion (18) pour le fluide sous pression qui est défini entre la surface extérieure (10a) du support toroïdal (10) et la surface intérieure (7b) du pneu en cours de traitement (7).

24. Appareil selon la revendication 19, dans lequel la surface extérieure (10a) du support toroïdal (10) a une étendue inférieure à l'étendue de la surface intérieure (7b) du pneu durci (7).

25. Appareil selon la revendication 19, dans lequel ledit support toroïdal (10) comporte au moins une tige de centrage (11) destinée à être engagée dans un portage de centrage (12) associé au moule (2) pour fixer le positionnement du support toroïdal (10) et du pneu (7) dans la cavité de moulage (6).

26. Appareil selon la revendication 25, dans lequel ladite tige de centrage (11) s'étend le long d'un axe géométrique commun audit support toroïdal (10), audit pneu en cours de traitement (7) et à ladite cavité de moulage (6).

27. Appareil selon la revendication 20, dans lequel lesdits dispositifs de chauffage comprennent au moins une conduite (15) pour envoyer un fluide chauffant dans lesdits canaux d'alimentation (17).

28. Appareil selon la revendication 19, dans lequel ledit fluide chauffant comprend le même fluide sous pression admis par les dispositifs d'alimentation en fluide sous pression (15 - 21).

29. Appareil selon la revendication 19, dans lequel ledit support toroïdal (10) a une structure qui cède élastiquement dans une direction axiale, au moins au niveau de régions correspondant aux bords circonférentiels intérieurs (7b) du pneu (7).
